# EUROPEAN PATENT SPECIFICATION

(11) **EP 0 479 611 B1**
(45) Date of publication and mention of the grant of the patent: **10.05.1995**
(21) Application number: 91309128.6
(22) Date of filing: 04.10.1991
(51) Int. Cl.: C08F 255/02

(54) **Ethene (co)polymer capable of crosslinking, its preparation and crosslinking**
Zur Vernetzung geeignetes Ethene (Co)Polymer, seine Herstellung und Vernetzung
(Co)polymère d'éthylène réticulable, sa préparation et sa réticulation

(30) Priority: 05.10.1990 FI 904926
(43) Date of publication of application: 08.04.1992
(73) Proprietor: Borealis Holding A/S, DK-2800 Lyngby (DK)
(72) Inventor: Sjöström, Häkan, S-66100 Säffle (SE); Bergström, Christer, SF-02170 Epsoo (FI); Ora, Marja, SF-01370 Vantaa (FI); Turpeinen, Veijo, SF-06450 Porvoo (FI)
(74) Representative: Woods, Geoffrey Corlett

(56) References cited:
- EP-A- 0 225 067
- US-A- 4 808 670
- PATENT ABSTRACTS OF JAPAN, unexamined applications, C field, vol. 13, no. 367, August 15, 1989 THE PATENT OFFICE JAPANESE GOVERNMENT page 92 C 626

## Description

The object of the invention is a method for the preparation of an ethene (co)polymer, in which a) the ethene is (co)pollymerized to an ethene (co)polymer, and b) to the ethene (co)polymer is grafted a crosslinking agent. The invention also relates to an ethene (co)polymer capable of crosslinking, to which a crosslinking agent has been grafted and the crosslinking of such an ethene (co)polymer by means of ionizing radiation or peroxide treatment.

Polyethene can be crosslinked in many different ways. Most usually peroxide crosslinking, radiation crosslinking or silane crosslinking have been used. The methods differ somewhat from each other. The radiation and peroxide crosslinkings are radical reactions. As a result of radiation or the decomposition of peroxides radicals are formed in the polymer chains. When these are combined covalent bonds are formed between the polymer chains i.e. crosslinks. In the silane crosslinking the silanol groups react with each other and form crosslinks.

In peroxide crosslinking the polyethene is first mixed with peroxides and additives, after which the mixture is extruded e.g. to cables or pipes. The crosslinking takes place in molten state after the extrusion in a so-called vulcanizing line, at a temperature of about 300°C, usually in nitrogen atmosphere. The peroxides decompose at high temperature and form radicals, which create radicals into the polymer chains. When the polymer radicals are combined covalent bonds are formed between the molecules.

After enough bonds have been created the polymer becomes insoluble. The degree of crosslinking is usually measured by solution extraction according to the ASTM standard D 27265.

The radiation crosslinking takes place at room temperature after extrusion, generally in a separate stage. Only amorphous parts of a polymer can be crosslinked by radiation. The radiation affects the crystalline parts of a polymer very scarcely. Accordingly, it is easier to crosslink a low density polyethene than a high density polyethene. Electron accelerators or a gamma radiation source are usually used as a radiation source. The energy of an electron accelerator suitable for crosslinking applications varies from 500 KeV to 10 MeV and the power between 10 and 20 kW. With same radiation energy, the electron radiation has a lower penetration depth than the gamma radiation. For this reason gamma radiation is used for the radiation crosslinking of big bodies. Gamma radiation originates from radioactive isotopes, e.g. ⁶⁰Co or ¹³⁷Cs, or it can be produced by an electron accelerator by conducting the electron spray e.g. to a wolfram electrode, whereby obstracting radiation is formed. The gamma radiation source has in both cases a remarkably lower batch velocity than the electron accelerator. The crosslinking of cables by an electron accelerator usually takes only a couple of seconds.

Polyethene can be grafted by vinyl silanes and from this grafted copolymer can immediately or later on be prepared a product. The product can afterwards be crosslinked by water vapor (Monosil and Sioplas technique). This technique is also used for the crosslinking of ethene vinyl silane copolymers. To make the crosslinking more effective a catalysator is usually used, e.g. dibutyl tin dilaurate. The silane crosslinking takes place slowly because the reaction rate depends on the diffusion of the water vapor in the polymer. Accordingly, the silane crosslinking is best suitable for thin-walled products, e.g. low voltage cables.

The heat resistance and the maximal operation temperature of polyethene can be improved by crosslinking. At high temperatures, as above the melting point of the crystalline part of polyethene, a non-crosslinked polyethene flows but a crosslinked polymer maintains its form, because the polymer chains cannot move in regard to each other. Accordingly, a crosslinked polyethene body better maintains its form than a non-crosslinked body. Irrespective of the crosslinking method the mechanical strength of the polymer at high temperature will improve. In many applications crosslinking is necessary to make the use of a polyethene possible. A non-crosslinked LDPE (a low density polyethene) can be used continuously at 70°C at the most and momentarily at 90°C. A crosslinked polyethene can be used continuously at a temperature of 90°C and momentarily at even a temperature of 250°C. Certain polyethene types, among others HDPE (high density polyethene) endure heat better than LDPE thanks to a higher density and crystallinity. The crosslinking makes the use of polyethene possible at a wider temperature range which is important in many applications (e.g. the cable and hot waterpipe applications). It is very important to reach a degree of crosslinking high enough in the isolation layers of cables and hotwater pipes so as to have a sufficient heat resistance. According to the ASTM standard D-2765 and measured by solution extraction a degree of crosslinking over 70% is needed for cable and pipe applications [Roberts, B.E. and Verne, S., Plastics and Rubber Processing and Applications 4 (1984), p. 135 to 139].

Crosslinked polyethene can also be used for so-called shrink product applications. The polymer is extruded and crosslinked, after which the product is stretched and cooled. The product cools to the streched form and in heating reverts to the same form as before the streching. In this way shrink film, pipes and joints can be prepared. The shrinking of a non-crosslinked product mainly depends on the orientation the polymer has obtained during the extrusion. The crosslinking makes an easy control of the shrinkage possible and, moreover, the shrinking power of a crosslinked polymer is large compared with that of a non-crosslinked one. The shrink product applications, e.g. the shrink film, bag or various kinds of joints, generally need a lower degree of crosslinking than the cables and the hotwater pipes, usually about 30 to 40%. Crosslinked polyethene can also be utilized in the preparation of cellular plastic. The polyethene, foaming agent and the additives are extruded and crosslinked. The crosslinked polymer is foamed whereby the polymer cools down into extended form. The advantage of a crosslinked polyethene foam is a smaller an more even cell size.

If the polymer has a high molecular mass a remarkable improvement of the mechanical properties, e.g. in the toughness, the tear strength and the thermal stability of the polymer, would be achieved. A polymer having a high molecular mass can be easily crosslinked because less crosslinks are needed before the polymer becomes insoluble. An easily crosslinked polyethene thus has a high molecular mass. The processing properties, on the other hand, are decreased decisively, when the molecular mass of the polymer increases. The melt index of polyethene is measured by the ASTM D-1238 standard method at a temperature of 190°C. The melt index illustrates the flowability and thus also the processability and the molecular mass of the polymer.

In radiation crosslinking, by the gel dose is meant the radiation dose that is necessary for the forming of at least one crosslink/molecule. By this radiation dose the polymer becomes insoluble, when all the polymer chains have been linked to each other. In practice crosslinking takes place incidentally; thus first only a part of the polymer becomes insoluble and when the radiation dose becomes larger the gel content increases (Bradley, R., Radiation Technology Hand-book, Marcel Dekker Inc. 1984).

By copolymerizing ethene and diene polymers can be prepared that contain double bonds. Many crosslinking polyethene qualities and ethene propylene rubbers are copolymers or terpolymers of ethene and dienes. These polymers usually have been prepared by coordination polymerization. h many cases 1,4-hexadiene has been used as the comonomer. Other dienes that have conventionally been used as a comonomer are e.g. 5-methyl-1,4-hexadiene, methyl-1,4-hexadiene, 1,6-octadiene, cyclohexadiene, dicyclopentadiene or 5-ethylidene-2-norbornene (JP 59106946-A, JP 57098534-A, JP 570599333-A).

Polymers that contain vinyl, vinylidene or vinylene double bonds crosslink by peroxides as much as 50% better than the corresponding saturated polyethenes. These unsaturated polymer qualities are crosslinked by radiation only a little better than the corresponding saturated polyethene qualities.

It is prior known that the crosslinking of polymers can be improved by precipitating them with multifunctional acrylate monomers. Hereby 1 to 10% by weight of mono-, di-, or trifunctional allyl monomers, e.g. tetraethyleneglycol diacrylate (TEGDMA), trimethylolpropylenetrimethacrylate (TMPTMA) or triallylcyanurate (TAC) have been used, e.g. (1544804-B). The problem with a mixture of polyethene and an acrylate monomer is that the dispersion of the polar monomer in a non-polar matrix plastic is difficult. The acrylate or allyl monomers precipitated in polyethene have an aptitude to migrate out of the matrix plastic and accumulate on the surface causing so-called sweating. Because of the sweating the body must be crosslinked as soon as possible after the extrusion. In the crosslinking stage the monomers polymerize to homopolymers of the acrylate or allyl monomer concerned. The monomers that are able to form bonds between the various polymer chains of the matrix plastic are thus located in the boundary of the monomer phase and the matrix plastic.

It is also prior known that an acrylate double bond is extremely sensitive to react by means of radiation or peroxide. Most varnishes and paints that harden by ultraviolet light (UV) or electron radiation are based on acrylated epoxy, urethane or polyester oligomers. These oligomers usually contain 3-5 acrylate double bonds. A radiation dose of 10 to 30kGy is enough for the hardening of these oligomers for an almost complete polymerization. Oligomers have a relatively high viscosity, for which reason the paints and varnishes are mixtures of oligomers and monomers. The most commonly used monomers are hexanedioldiacrylate (HDDA), tripropyleneglycoldiacrylate (TMPTA) or N-vinylpyrrolidone (NVP) [Holman, R., UV & EB curing formulations for printing inks, coatings & paints, SITA-Technology 1984].

The aim of the present invention is to provide an ethene (co)polymer whose processing properties in non-crosslinked state correspond to the processing properties of the best ethene (co)polymers. Furthermore, it must be possible to process further and crosslink the hardened non-crosslinked product by means of conventional methods. A further aim of the invention is the preparation of an ethene (co)polymer capable of crosslinking that has as high a reactivity as possible when crosslinked by means of radiation or a peroxide. Also the final crosslinked ethene (co)polymer shall be as usable as possible as to its properties.

The above-mentioned aims have now been achieved by a method for the preparation of an ethene (co)polymer capable of crosslinking principally characterized by what is stated in the characterizing clause of claim 1. Thus, it has been realized that in a method of the kind mentioned the ethene must in the first phase a) be copolymerized with an unsaturated comonomer containing a first hetero group to an ethene (co)polymer containing said hetero group. After that, in the second phase i.e. in phase b), said ethene (co)polymer having the first hetero group should be crosslinked by a crosslinking agent having an unsaturated crosslinking group and another hetero group capable of reacting with said first hetero group.

By hetero group is here meant an organic or inorganic reactive group having some other atom than carbon or hydrogen. The first hetero group i.e. that of the unsaturated comonomer and the other i.e. that of the crosslinking agent thus form a functional pair of groups that forms the bond connecting the crosslinking agent to the comonomer. Such functional pairs of groups are e.g. the following pairs:

| | |
|---|---|
| acid (or its derivative) | epoxy |
| amino | epoxy |
| hydroxy | epoxy |
| mercapto | epoxy |
| hydroxy | acid (or its derivative) |
| hydroxy | isocyanate |
| amino | isocyanate |
| acid | isocyanate |
| hydroxy | ketene |
| urea | isocyanate |

These groups react with each other and they can belong either to the comonomer or the crosslinking agent.

According to one embodiment the hetero group of the monomer is a hydroxyl group and the hetero group of the crosslinking agent is a carboxyl group. When such a classic ester-forming pair is in question the said unsaturated monomer preferably is one according to following formula (I): 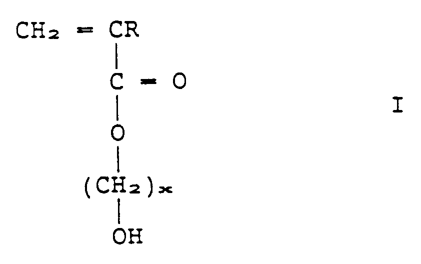
wherein R is H, alkyl or aryl and x is one of the integers 1 to 10. It is still more preferable that R is H or -CH₃ and x is one of the integers 1 to 4, whereby a suitable unsaturated monomer is e.g. hydroxyethyl(meth)acrylate.

When a pair of substances suitable for esterification is concerned the crosslinking agent preferably is in accordance with the following formula (II) 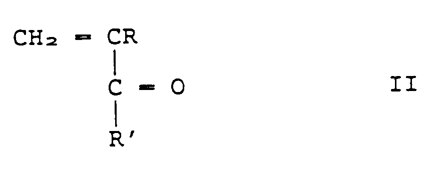
wherein R is H, alkyl or aryl and R′ is OH, a halogen or the bridge oxygen of an acid anhydride. A very suitable crosslinking agent is acrylic acid or alkacrylic acid such as methacrylic acid.

The invention also relates to an ethene (co)polymer capable of crosslinking, to which has been grafted a crosslinking agent. The ethene (co)polymer according to the invention then contains units of ethene and comonomers to which an unsaturated crosslinking agent has been grafted by means of a reaction between the hetero groups of the comonomer and the crosslinking agent.

From the reaction between the hetero group of the comonomer, e.g. a hydroxyl group, and the hetero group of the crosslinking agent, e.g. a carboxyl group, a branch is created, formed by the crosslinking agent in the ethene (co)polymer, the graft preferably having the formula (III) 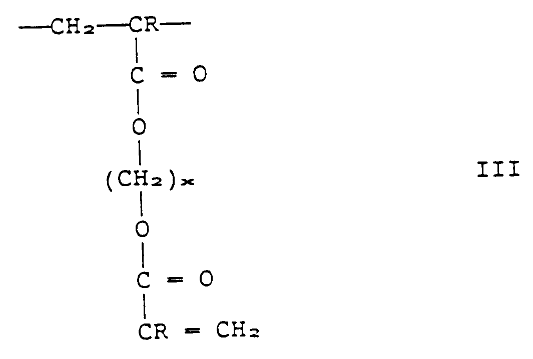
wherein R is H, alkyl or aryl and x is one of the integers 1 to 10. R preferably is H or -CH₃ and x preferably is 1, 2, 3, or 4.

The ethene (co)polymer according to the invention is particularly capable of crosslinking when it is being crosslinked by means of ionizing radiation or peroxide treatment. This applies particularly when the unsaturated crosslinking group of the crosslinking agent is an acrylic group. Hereby it is worth using doses of ionizing radiation being of the order 10 to 30kGy, because by such radiation doses the crosslinking is improving remarkably compared with the prior art saturated polyetheneacrylate copolymers or ethenediene copolymers.

The above-mentioned hetero groups can naturally change place e.g. so that the acid group is in the polymer chain and it is esterified in connection with the grafting to an unsaturated alcohol.

The polymer according to the invention can be used e.g. for the following applications:
- cable or pipe applications where a high crosslinking rate is required,
- the material can also be used for shrink product applications and for the production of cellular plastic,
- the polymer can be used in combination products having already a component degrading easily in Gy radiation e.g. in the coating of paper. The thermal stability of the coating can be improved by radiation crosslinking. Thanks to the good crosslinking ability of the polymer the paper does not degrade when it is radiated.
- the polymer can be used for objects to be coloured or painted, in which chemical bonds can be created between the polymer and the layer of paint, thus to improve the adhesion,
- the polymer can also be dispersed in polyolefins (e.g. polypropylene) and crosslinked in connection with mixing, whereby thermoplastic elastomer is obtained, or it can be dispersed in technical plastics (e.g. polyamide), whereby their toughness is improved,
- the polymer can be used to improve the adhesion e.g. to metals and polar plastics.

The following examples are presented for the illustration of the invention:
For the clarification of the structure of the esterified polymer a Fourier Transform infrared spectrometer (FTIR) has been used as well as a nuclear magnetic resonance spectrometer (NMR). Moreover, a differential scanning calorymetry (DSC) has been used for the clarification of the melting point and the crystallinity of the polymer.

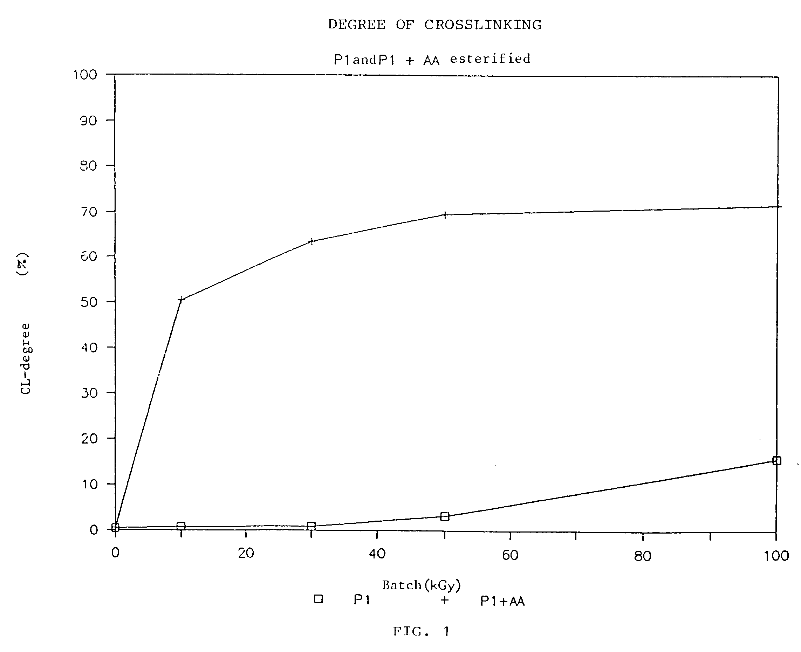

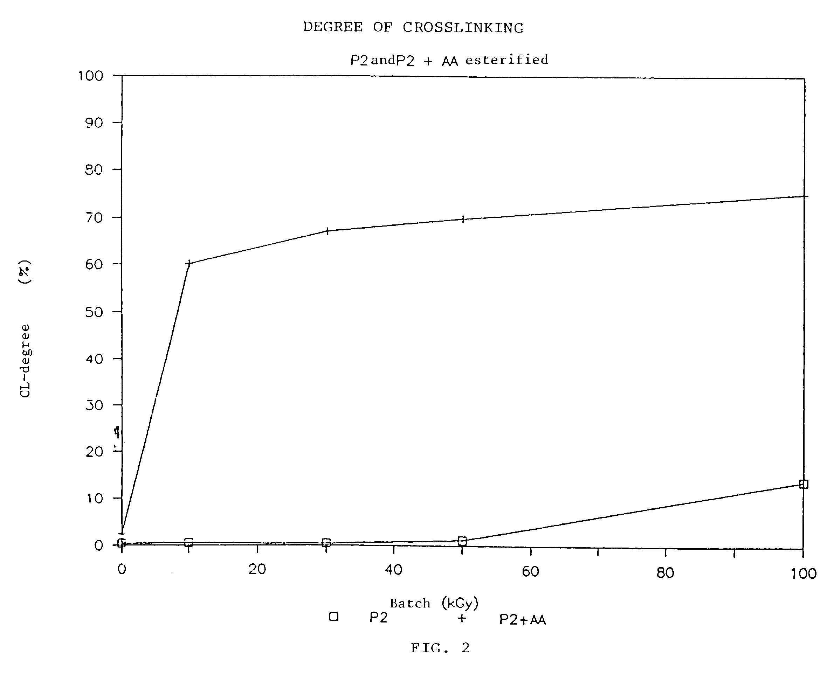

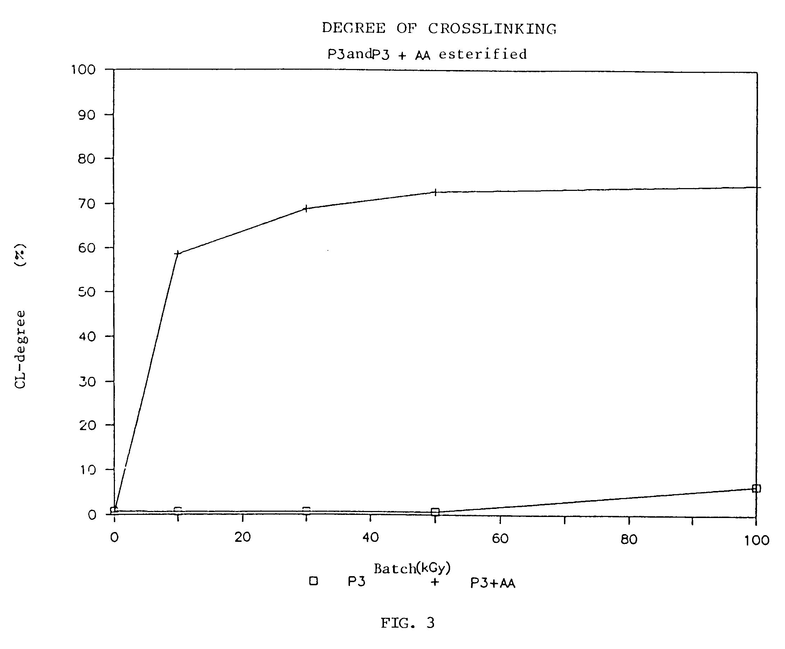

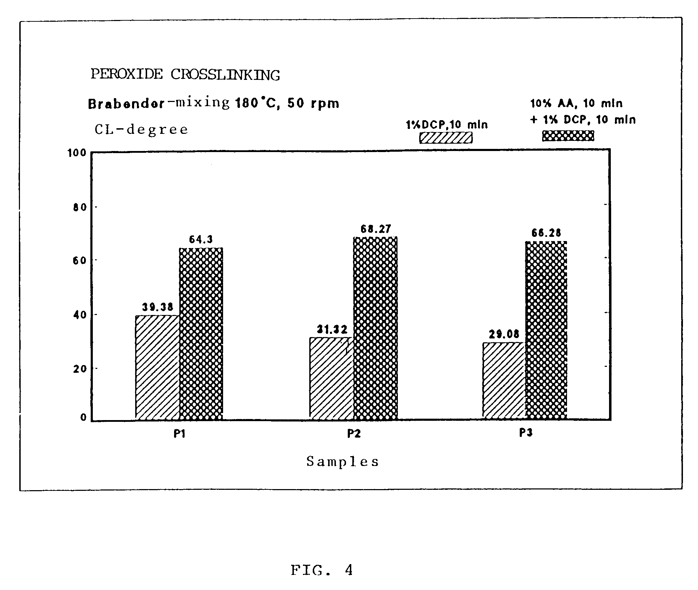

In Figure 1 is presented the degree of crosslinking of example 5, in figure 2 the degree of crosslinking of example 6, in figure 3 the degree of crosslinking of example 7 and in figure 4 are presented the degrees of crosslinking of examples 8, 9, and 10.

### Example 1

The esterification has been carried out in melt state by a Brabender Plasticorder mixer. As raw material has been used an ethene hydroxyethyl methacrylate copolymer, whose hydroxyethyl methacrylate (HEMA) content is 5% by weight and the melt index 2.4g/10min (Pl, see table 1). The polymer has been esterified by 10% by weight of acrylic acid. The conditions were 180°C, the speed of revolution 50rpm and the residence time 10 minutes.

### Example 2

It was proceeded as in example 1, but as raw material was used ethene hydroxyethyl methacrylate copolymer whose hydroxyethyl methacrylate content is 8% by weight and melt index 2.5g/10 min (P2, see table 1).

### Example 3

It was proceeded as in example 1, but as raw material was used ethene hydroxyethyl methacrylate copolymer, whose hydroxyethyl methacrylate content is 7% by weight and melt index 11.6g/10 min (P3, see table 1).

### Example 4

From the polymer prepared in example 1, a film having the thickness of 0.1mm was prepared by compression moulding. The compression time was 5 min., the temperature 150°C and the pressure 100 bars.

### Example 5

The sample body was crosslinked by radiation using an Energy Sciences Inc. Electrocurtain Lab-Unit electron accelerator. The sample bodies were radiated with 175keV electrons using radiation doses of 10, 30, 50, and 100kGy at an oxygen content of about 120 to 150ppm, O₂.

The degree of crosslinking was measured according to ASTM standard D 2765 except that no antioxidant was used and the extraction time had been extended to 24 hours. The degrees of crosslinking achieved by doses of 0, 10, 30, 50, and 100kGy were 0.4%, 50.4%, 63.4%, 69.5% and 71.6%, see figure 1, in which the reference is a non-esterified P1.

### Example 6

It was proceeded as in examples 4 and 5, but as material was used the material prepared in example 2. The degrees of crosslinking achieved by doses of 0, 10, 30, 50 ja 100kGy were 2.3%, 60.2%, 67.1%, 69.9% and 75.1%, see figure 2, in which the reference is a non-esterified P2.

### Example 7

It was proceeded as in examples 4 and 5, but as raw material was used the polymer prepared in example 3. The degrees of crosslinking measured by a dose of 0, 10, 30, 50, and 100kGy were 0.5%, 58.6%, 68.8%, 72.7%, and 74.1%, see figure 3, in which the reference is a non-esterified P3.

### Example 8

A peroxide crosslinking was carried out by a Brabender Plasticorder mixer using 1% by weight of dicumyl peroxide. The conditions were 180°C, 50rpm and 10 minutes. As the degree of crosslinking of the non-esterified copolymer P1, crosslinked in the same manner, 64.3% was achieved. For the crosslinking degree of a crosslinked, non-esterified copolymer P1 was in the same manner achieved 39.4%.

### Example 9

It was proceeded as in example 8, except that for the crosslinking was used the polymer prepared in example 2, whereby 68.3% was achieved as the degree of crosslinking. As the degree of crosslinking of the non-esterified copolymer P2 crosslinked in the same manner, was achieved 31,3% (see figure 4).

### Example 10

It was proceeded as in example 1, but for the crosslinking was used the polymer prepared in example 3, whereby 66.3% was achieved as the degree of crosslinking. As the degree of crosslinking of the non-esterified copolymer P3, crosslinked in the same manner, was achieved 29.1% (see figure 4).

**Table 1**

| The melt indices and HEMA-contents of E-HEMA copolymers | | |
|---|---|---|
| Material | Melt index (2.16kg) (g/10 min) | HEMA (% by weight) |
| P1 | 2.4 | 5 |
| P2 | 2.5 | 8 |
| P3 | 11.6 | 7 |

## Claims

1. Method for the preparation of a crosslinkable ethene (co)polymer, wherein
a) the ethene is (co)polymerized to an ethene (co)polymer, and
b) to the ethene (co)polymer is grafted a crosslinking agent,
**characterized** in that the ethene, in stage a) is copolymerized with an unsaturated monomer containing a first hetero group, to an ethene (co)polymer having said first hetero group, and, in stage b) the ethene (co)polymer having said first hetero group is grafted by a crosslinking agent having an unsaturated crosslinking group and a second hetero group reacting in the grafting with the first hetero group.

2. Method according to claim 1, **characterized** in that the first hetero group is a hydroxyl group.

3. Method according to claim 1 or 2, **characterized** in that the unsaturated monomer has the following formula (I) 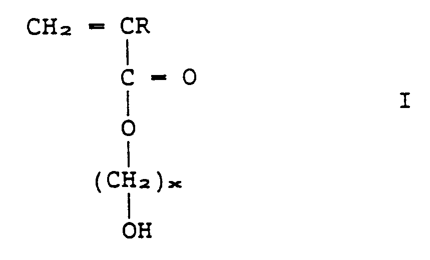 in which R is H, alkyl or aryl and x is one of the integers 1 to 10.

4. Method according to claim 3, **characterized** in that R is H or -CH₃ and x is one of the integers 1, 2, 3 or 4.

5. Method according to claim 4, **characterized** in that the unsaturated monomer is hydroxyethyl methacrylate.

6. Method according to claims 1 or 2, **characterized** in that the other hetero group is a carboxyl group or its derivative.

7. Method according to any of the preceding claims, **characterized** in that the crosslinking agent has the following formula (II): 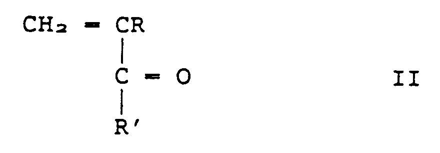 wherein R is H, alkyl or aryl and R′ is OH, halogen or a bridge oxygen of an acid anhydride.

8. Method according to claim 7, **characterized** in that the crosslinking agent is an acrylic acid or methacrylic acid.

9. A crosslinkable ethene (co)polymer, to which has been grafted a crosslinking agent, **characterized** in that the ethene (co)polymer has units of ethene and a comonomer to which the unsaturated crosslinking agent has been grafted by means of a reaction between the hetero groups of the comonomer and the crosslinking agent.

10. An ethene (co)polymer according to claim 9, **characterized** in that the hetero group of the comonomer is a hydroxyl group.

11. An ethene (co)polymer according to claim 9 or 10, **characterized** in that the hetero group of the crosslinking agent is a carboxyl group.

12. An ethene (co)polymer according to any of the claims 9 to 11, **characterized** in that the formula of the graft formed by the crosslinking agent to the ethene (co)polymer is (III) 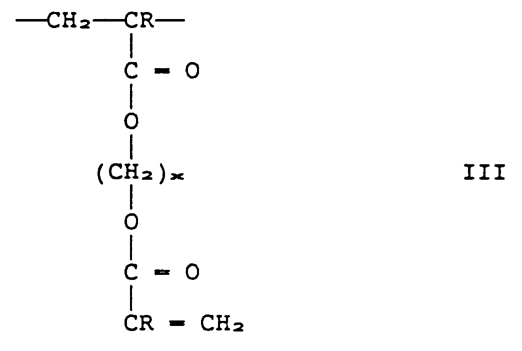 in which R is H, alkyl or aryl and x is one of the integers 1 to 10.

13. Ethene (co)polymer according to claim 12, **characterized** in that R is H or CH₃ and x is 1, 2, 3, or 4.

14. Crosslinking of an ethene (co)polymer according to any of the claims 9 to 13 or prepared by a method according to any of the claims 1 to 8 by means of an ionizing radiation or a peroxide treatment.

15. Crosslinking according to claim 14, **characterized** in that the doses of the ionizing radiation are of the order 10 to 30kGy.

## Patentansprüche

1. Verfahren zur Herstellung eines vernetzbaren Ethen-(Co)polymeren, wobei
a) das Ethen zu einem Ethen-(Co)polymeren (co)polymerisiert wird und
b) an das Ethen-(Co)polymere ein Vernetzungsmittel gepfropft wird,
dadurch gekennzeichnet, daß das Ethen in Stufe a) mit einem ungesättigten Monomeren mit einem Gehalt an einer ersten Heterogruppe zu einem Ethen-(Co)polymeren mit der ersten Heterogruppe copolymerisiert wird und in Stufe b) das Ethen-(Co)polymere mit der ersten Heterogruppe durch ein Vernetzungsmittel mit einer ungesättigten Vernetzungsgruppe und einer zweiten Heterogruppe, die bei der Pfropfung mit der ersten Heterogruppe reagiert, gepfropft wird.

2. Verfahren nach Anspruch 1, dadurch gekennzeichnet, daß es sich bei der ersten Heterogruppe um eine Hydroxygruppe handelt.

3. Verfahren nach einem der Ansprüche 1 oder 2, dadurch gekennzeichnet, daß das ungesättigte Monomere die folgende Formel (I) aufweist: 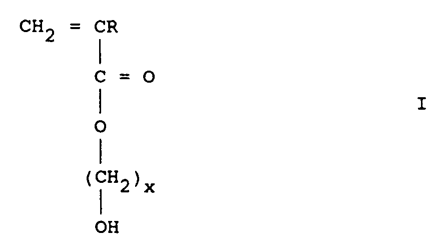 worin R die Bedeutung H, Alkyl oder Aryl hat und x eine der ganzen Zahlen von 1 bis 10 ist.

4. Verfahren nach Anspruch 3, dadurch gekennzeichnet, daß R die Bedeutung H oder -CH₃ hat und x eine der ganzen Zahlen 1, 2, 3 oder 4 ist.

5. Verfahren nach Anspruch 4, dadurch gekennzeichnet, daß es sich bei dem ungesättigten Monomeren um Hydroxyethylmethacrylat handelt.

6. Verfahren nach einem der Ansprüche 1 oder 2, dadurch gekennzeichnet, daß die andere Heterogruppe eine Carboxylgruppe oder ein Derivat davon ist.

7. Verfahren nach einem der vorstehenden Ansprüche, dadurch gekennzeichnet, daß das Vernetzungsmittel die folgende Formel (II) aufweist: 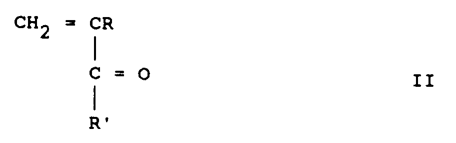 worin R die Bedeutung H, Alkyl oder Aryl hat und R' die Bedeutung OH, Halogen oder Brückensauerstoff eines Säureanhydrids hat.

8. Verfahren nach Anspruch 7, dadurch gekennzeichnet, daß das Vernetzungsmittel eine Acrylsäure oder Methacrylsäure ist.

9. Vernetzbares Ethen-(Co)polymeres, an das ein Vernetzungsmittel gepfropft worden ist, dadurch gekennzeichnet, daß das Ethen-(Co)polymere Einheiten von Ethen und einem Comonomeren aufweist, an die das ungesättigte Vernetzungsmittel mittels einer Reaktion zwischen den Heterogruppen des Comonomeren und des Vernetzungsmittels gepfropft worden ist.

10. Ethen-(Co)polymeres nach Anspruch 9, dadurch gekennzeichnet, daß die Heterogruppe des Comonomeren eine Hydroxygruppe ist.

11. Ethen-(Co)polymeres nach Anspruch 9 oder 10, dadurch gekennzeichnet, daß die Heterogruppe des Vernetzungsmittels eine Carboxylgruppe ist.

12. Ethen-(Co)polymeres nach einem der Ansprüche 9 bis 11, dadurch gekennzeichnet, daß die Formel der gepfropften Gruppe, die durch das Vernetzungsmittel am Ethen-(Co)polymeren gebildet worden ist, die Formel (III) ist: 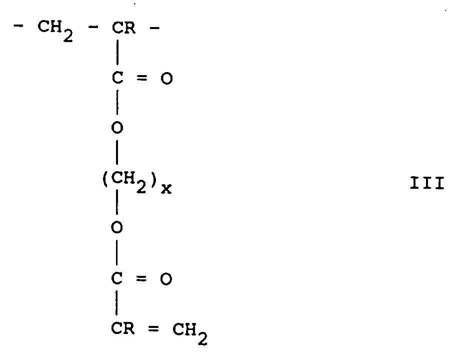 worin R die Bedeutung H, Alkyl oder Aryl hat und x eine der ganzen Zahlen von 1 bis 10 ist.

13. Ethen-(Co)polymeres nach Anspruch 12, dadurch gekennzeichnet, daß R die Bedeutung H oder CH₃ hat und x 1, 2, 3 oder 4 ist.

14. Vernetzung eines Ethen-(Co)polymeren nach einem der Ansprüche 9 bis 13 oder hergestellt nach einem Verfahren nach einem der Ansprüche 1 bis 8 mittels ionisierender Strahlung oder einer Peroxidbehandlung.

15. Vernetzung nach Anspruch 14, dadurch gekennzeichnet, daß die Dosis der ionisierenden Strahlung in der Größenordnung von 10 bis 30 kGy liegt.

## Revendications

1. Procédé de préparation d'un (co)polymère d'éthène réticulable, dans lequel :
a) l'éthène est (co)polymérisé pour donner un (co)polymère d'éthène, et
b) on greffe au (co)polymère d'éthène un agent de réticulation,
caractérisé en ce que l'éthène, dans le stade a), est copolymérisé avec un monomère insaturé contenant un premier groupe hétéro, pour donner un (co)polymère d'éthène ayant ce premier groupe hétéro, et dans le stage b), le (co)polymère d'éthène ayant ce premier groupe hétéro, est greffé par un agent de, réticulation ayant un groupe de réticulation insaturé et un second groupe hétéro réagissant dans le greffage avec le premier groupe hétéro.

2. Procédé selon la revendication 1, caractérisé en ce que le premier groupe hétéro est un groupe hydroxyle.

3. Procédé selon la revendication 1 ou 2, caractérisé en ce que le monomère insaturé répond à la formule (I) suivante 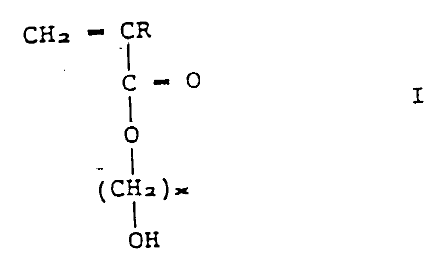 dans laquelle R est H, un groupe alkyle ou aryle et x est un entier de 1 à 10.

4. Procédé selon la revendication 3, caractérisé en ce que R est H ou -CH₃, et x est un des entiers 1, 2, 3 ou 4.

5. Procédé selon la revendication 4, caractérisé en ce que le monomère insaturé est le méthacrylate d'hydroxyéthyle.

6. Procédé selon la revendication 1 ou 2, caractérisé en ce que l'autre groupe hétéro est un groupe carboxyle ou un de ses dérivés.

7. Procédé selon l'une quelconque des revendications précédentes, caractérisé en ce que l'agent de réticulation répond à la formule (II) suivante : 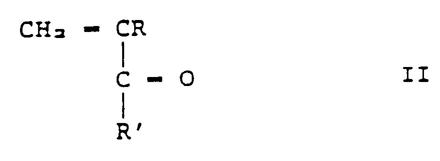 où R est H, un groupe alkyle ou aryle et R' est OH, un atome d'halogène ou un oxygène de pontage d'un anhydride d'acide.

8. Procédé selon la revendication 7, caractérisé en ce que l'agent de réticulation est un acide acrylique ou méthacrylique.

9. (Co)polymère d'éthène réticulable, auquel on a greffé un agent de réticulation, caractérisé en ce que le (co)polymère d'éthène a des motifs d'éthène et d'un comonomère auquel un agent de réticulation insaturé a été greffé par une réaction entre les groupes hétéro du comonomère et l'agent de réticulation.

10. (Co)polymère d'éthène selon la revendication 9, caractérisé en ce que le groupe hétéro du comonomère est un groupe hydroxyle.

11. (Co)polymère d'éthène selon la revendication 9 ou 10 caractérisé en ce que le groupe hétéro de l'agent de réticulation est un groupe carboxyle.

12. (Co)polymère d'éthène selon l'une quelconque des revendications 9 à 11, caractérisé en ce que la formule de la greffe formée par l'agent de réticulation sur le (co)polymère d'éthène répond à la formule (III) : 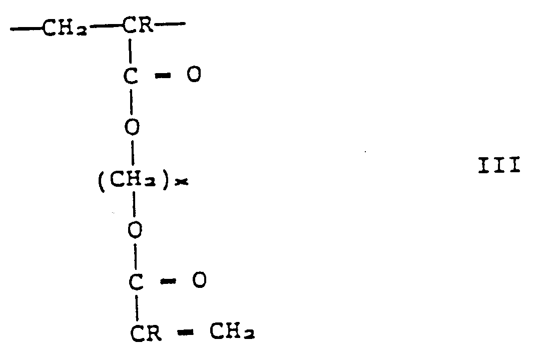 dans laquelle R est H, un groupe alkyle ou aryle et x est un entier de 1 à 10.

13. (Co)polymère d'éthène selon la revendication 12, caractérisé en ce que R est H ou CH₃ et x est 1, 2, 3 ou 4.

14. Réticulation d'un (co)polymère d'éthène selon l'une quelconque des revendications 9 à 13 ou préparé par un procédé selon l'une quelconque des revendications 1 à 8, au moyen d'un rayonnement ionisant ou d'un traitement par peroxyde.

15. Réticulation selon la revendication 14, caractérisée en ce que les doses du rayonnement ionisant sont de l'ordre de 10 à 30 kGy.
